# EUROPEAN PATENT APPLICATION

(11) **EP 4 443 572 A1**
(43) Date of publication of application: **09.10.2024**
(21) Application number: 22900988.1
(22) Date of filing: 27.10.2022
(51) Int. Cl.: H01M 8/18, H01M 8/04

(54) **TANK, TANK STRUCTURE, AND REDOX FLOW BATTERY SYSTEM**

(30) Priority: 30.11.2021 JP 2021194961
(71) Applicant: SUMITOMO ELECTRIC INDUSTRIES, LTD., Osaka-shi, Osaka 541-0041 (JP)
(72) Inventor: FUJITA Hayato, Osaka-shi, Osaka 541-0041 (JP); HANAFUSA Kei, Osaka-shi, Osaka 541-0041 (JP); IDA Shoma, Osaka-shi, Osaka 541-0041 (JP)
(74) Representative: Hoffmann Eitle
(86) International application number: PCT/JP2022/040156
(87) International publication number: WO 2023/100555

(57) **Abstract**

A tank for storing an electrolytic solution of a redox flow battery system, wherein: the tank comprises a tank body, and first plate members that partition the interior space of the tank body into a plurality of regions lined up in a first direction; the tank body is provided with an inlet for the electrolytic solution, said inlet being provided in a first end portion of the tank body in the first direction, and an outlet for the electrolytic solution, said outlet being provided in a second end portion of the tank body in the first direction; and the first plate members are provided with a plurality of holes penetrating in the first direction.

## Description

### TECHNICAL FIELD

The present disclosure relates to a tank, a tank structure, and a redox flow battery system. This application claims priority based on Japanese Patent Application No. 2021-194961 filed on November 30, 2021, the entire contents of which are incorporated herein by reference.

### BACKGROUND ART

Patent literature 1 (PTL 1) discloses a container-type redox flow battery. The redox flow battery includes a battery cell, a tank, a pipe, and a pump. The tank stores an electrolyte. The pipe includes a pipe connecting the tank and the pump, a pipe connecting the pump and the battery cell, and a pipe connecting the battery cell and the tank. The electrolyte is circulated between the tank and the battery cell by being pumped through the pipes with the pump.

### CITATION LIST

### PATENT LITERATURE

PTL 1: International Publication WO 2017/183158

### SUMMARY OF INVENTION

A tank according to the present disclosure is configured to store an electrolyte of a redox flow battery system and includes a tank body and a first plate member configured to partition an internal space of the tank body into a plurality of regions arranged in a first direction. The tank body includes an inlet for the electrolyte provided at a first end portion of the tank body in the first direction and an outlet for the electrolyte provided at a second end portion of the tank body in the first direction. The first plate member has a plurality of holes extending through the first plate member in the first direction.

### BRIEF DESCRIPTION OF THE DRAWINGS

FIG. 1 is a schematic configuration view of a tank according to an embodiment.
FIG. 2 is a schematic configuration view of a plate member provided in the tank according to the embodiment.
FIG. 3 is an explanatory view illustrating the flow of an electrolyte in the tank according to the embodiment.
FIG. 4 is an explanatory view illustrating the flow of an electrolyte in the tank provided with another example of the plate member in the embodiment.
FIG. 5 is a graph showing a flow rate distribution of the electrolyte in the tank shown in FIG. 4.
FIG. 6 is an enlarged cross-sectional view showing still another example of the plate member provided in the tank according to the embodiment.
FIG. 7 is a schematic configuration view of a tank structure according to the embodiment and a redox flow battery system according to the embodiment.
FIG. 8 is a schematic configuration view of a cell stack provided in the redox flow battery system according to the embodiment.

### DETAILED DESCRIPTION

### [Problems to be Solved by Present Disclosure]

In a tank, a vortex may be formed by the flow of an electrolyte returned from a battery cell. The vortex may cause turbulent flow of the electrolyte, shortcut of the flow, or stagnation. In particular, when the shortcut of the flow or the stagnation of the electrolyte occurs, an amount of the electrolyte supplied from the tank to the battery cell decreases. As a result, the electrolyte used for battery reaction in the battery cell may be reduced, and a utilization factor of the electrolyte in the tank may be decreased. The utilization factor is a ratio of the amount of electrolyte supplied from the tank to the battery cell to the amount of electrolyte in the tank. When the utilization factor is decreased, the amount of electrolyte that is not used for the battery reaction in the battery cell is increased, and thus an energy density may be decreased.

An object of the present disclosure is to provide a tank in which a decrease in a utilization factor of an electrolyte in the tank can be suppressed. Another object of the present disclosure is to provide a tank structure including the tank. Still another object of the present disclosure is to provide a redox flow battery system including the tank structure.

### [Advantageous Effects of Present Disclosure]

A tank according to the present disclosure can suppress a decrease in a utilization factor of an electrolyte in the tank. A tank structure according to the present disclosure can suppress a decrease in the utilization factor of the electrolyte in the tank. A redox flow battery system according to the present disclosure has a high energy density.

### [Description of Embodiments of Present Disclosure]

First, embodiments of the present disclosure will be listed and described.
(1) A tank according to an aspect of the present disclosure is configured to store an electrolyte of a redox flow battery system and includes a tank body and a first plate member configured to partition an internal space of the tank body into a plurality of regions arranged in a first direction. The tank body includes an inlet for the electrolyte provided at a first end portion of the tank body in the first direction and an outlet for the electrolyte provided at a second end portion of the tank body in the first direction. The first plate member has a plurality of holes extending through the first plate member in the first direction.

The first plate member has first openings through which the electrolyte is introduced and second openings through which the electrolyte is discharged. The holes connects the first openings and the second openings to each other. In the holes extending through the first plate member in the first direction, at least parts of paths close to the first openings and parts of the paths close to the second openings among the paths from the first openings to the second openings are parallel to the first direction. Central parts of the paths may be parallel to the first direction, or may intersect the first direction orthogonally or non-orthogonally.

In the tank of the present disclosure, the flow of the electrolyte from the inlet to the outlet tends to become a laminar flow state. The first plate member is provided between the inlet and the outlet. Therefore, the electrolyte flowing from the inlet to the outlet passes through the holes provided in the first plate member. Since the holes extend through the first plate member in the first direction, the flow of the electrolyte through the holes tends to become a laminar flow state in the first direction. Since the flow of the electrolyte is a laminar flow, the electrolyte in the tank can be efficiently used.

(2) In the tank according to the above (1), the tank body may have a uniform cross-sectional shape in the first direction.

In the tank having the above cross-sectional shape, the flow of the electrolyte from the inlet to the outlet in the tank tends to become a laminar flow state.

(3) In the tank according to the above (1) or (2), a shape of the tank body may be a rectangular parallelepiped. The first direction may be a direction along a long side of the tank body.

In the tank body having the rectangular parallelepiped shape, stagnation is likely to occur in the electrolyte flowing along the long side of the tank body. According to the tank of the present disclosure, the first plate member is provided in such a manner that a plurality of regions are arranged in the direction along the long side of the tank body, and thus the electrolyte in the tank can be efficiently used.

(4) In the tank according to any one of the above (1) to (3), an equivalent circle diameter of each of the plurality of holes may be one time to ten times a thickness of the first plate member.

The flow of the electrolyte tends to vary depending on the size of the equivalent circle diameter of each of the holes. According to the above size of each of the holes, the flow of the electrolyte tends to become a laminar flow state.

(5) In the tank according to any one of the above (1) to (4), a thickness of the first plate member may be 2 mm to 100 mm.

A length of each of the holes in the first direction varies depending on the thickness of the first plate member. The direction or flow rate of the electrolyte flowing through each of the holes varies depending on the length of each of the holes. When the thickness of the first plate member is within the above range, the direction and flow rate of the electrolyte flowing through each of the holes can be easily adjusted. When the thickness of the first plate member is within the above range, the flow of the electrolyte tends to become a laminar flow state.

(6) In the tank according to any one of the above (1) to (5), a thickness of the first plate member may be 0.1% to 1% of a length of the internal space in the first direction.

The length of each of the holes in the first direction varies depending on the thickness of the first plate member. The direction or flow rate of the electrolyte flowing through each of the holes varies depending on the length of each of the holes. When the thickness of the first plate member is within the above range, the direction and flow rate of the electrolyte flowing through each of the holes can be easily adjusted. When the thickness of the first plate member is within the above range, the flow of the electrolyte tends to become a laminar flow state.

(7) In the tank according to any one of the above (1) to (6), a length of the internal space in the first direction may be 4.5 m to 12 m.

In the tank body having the internal space of the above length, stagnation of the electrolyte is likely to occur. According to the tank of the present disclosure, even in the tank body having the internal space of the above length, the electrolyte in the tank can be efficiently used.

(8) In the tank according to any one of the above (1) to (7), a length between the inlet and the outlet in the first direction may be 3.2 m to 11.5 m.

When the inlet and the outlet are away from each other by the above length, stagnation of the electrolyte is likely to occur. According to the tank of the present disclosure, even when the inlet and the outlet are away from each other by the above length, the electrolyte in the tank can be efficiently used.

(9) In the tank according to any one of the above (1) to (8), a length between the inlet and the outlet in the first direction may be 75% to 95% of a length of the internal space in the first direction.

When the inlet and the outlet are away from each other by the above length, stagnation of the electrolyte is likely to occur. According to the tank of the present disclosure, even when the inlet and the outlet are away from each other by the above length, the electrolyte in the tank can be efficiently used.

(10) In the tank according to any one of the above (1) to (9), a ratio of a total area of openings of the plurality of holes to an area within an outer peripheral edge of the first plate member may be 30% to 70%.

In the first plate member satisfying the above ratio, the flow of the electrolyte from the inlet to the outlet in the tank tends to become a laminar flow state.

(11) In the tank according to any one of the above (1) to (10), the first direction may be a direction perpendicular to a direction in which gravity acts.

When the electrolyte flows in the direction perpendicular to the direction in which gravity acts, stagnation of the electrolyte is likely to occur. The tank of the present disclosure allows efficient use of the electrolyte in the tank even when the electrolyte flows in the direction perpendicular to the direction in which gravity acts.

(12) In the tank according to any one of the above (1) to (11), an axis of the inlet and an axis of the outlet each may intersect the first direction.

The axis of the inlet is a line passing through the center of the smallest imaginary circle inscribed on an inner peripheral surface of the inlet. The axis of the outlet is a line passing through the center of the smallest imaginary circle inscribed on an inner peripheral surface of the outlet. When the axis of the inlet and the axis of the outlet each intersect the first direction, stagnation of the electrolyte is likely to occur. According to the tank of the present disclosure, even when the axis of the inlet and the axis of the outlet each intersect the first direction, the electrolyte in the tank can be efficiently used.

(13) In the tank according to any one of the above (1) to (12), the tank body may have a first surface and a second surface facing each other in the first direction. The first surface may be located at the first end portion. The second surface may be located at the second end portion. A length between the first plate member and the first surface may be smaller than a length between the first plate member and the second surface.

In the above embodiment (13), even when a vortex is formed by the flow of the electrolyte flowing in from the inlet of the tank, the region where the vortex is formed can be limited within an area close to the inlet in the internal space. Therefore, in the above embodiment (13), the flow of the electrolyte from the inlet to the outlet in the tank tends to become a laminar flow state.

(14) In the tank according to the above (13), the length between the first plate member and the first surface may be 10% to 30% of a length between the first surface and the second surface.

In the above embodiment (14), even when a vortex is formed by the flow of the electrolyte flowing in from the inlet of the tank, the region where the vortex is formed can be limited within a small area close to the inlet in the internal space. Therefore, in the above embodiment (14), the flow of the electrolyte from the inlet to the outlet in the tank tends to become a laminar flow state.

(15) The tank according to any one of the above (1) to (14) may further include a second plate member configured to partition the internal space, which is partitioned by the first plate member, into a plurality of regions arranged in the first direction. The second plate member may be disposed closer to the outlet than the first plate member, and may have a plurality of holes extending through the second plate member in the first direction.

When the second plate member is further provided in addition to the first plate member, the flow of the electrolyte from the inlet to the outlet in the tank tends to become a laminar flow state.

(16) In the tank according to the above (15), the first plate member and the second plate member may be arranged close to each other in the first direction. The first plate member may have first openings of the holes through which the electrolyte is introduced. The second plate member may have second openings of the holes through which the electrolyte is discharged. The first openings and the second openings may be arranged in such a manner as to be displaced from each other when viewed from the first direction.

When the first plate member and the second plate member are arranged close to each other in the first direction, and the first openings of the first plate member and the second openings of the second plate member are arranged in such a manner as to be displaced from each other, the directions of the flow of the electrolyte are changed in the middle of the paths from the first openings to the second openings. Since the directions of the flow of the electrolyte are changed in the middle of the paths, even when the electrolyte is introduced into the respective first openings at different rates, a difference in the rates of the electrolyte is reduced in the middle of the paths, and the flow of the electrolyte discharged from each of the second openings tends to become a laminar flow state.

When the first plate member and the second plate member are arranged close to each other in the first direction, it is possible to easily construct a configuration in which the directions of the flow of the electrolyte are changed in the middle of the paths from the first openings of the first plate member to the second openings of the second plate member. For example, even when all the holes provided in each of the first plate member and the second plate member are arranged in the first direction, the first plate member and the second plate member are arranged with a slight gap therebetween in such a manner that the first openings and the second openings are displaced from each other. With this arrangement, it is easy to form the holes in each of the first plate member and the second plate member, and the directions of the flow of the electrolyte are changed in the middle of the paths from the first openings to the second openings.

(17) In the tank according to any one of the above (1) to (15), the first plate member may have first openings of the holes provided in a first surface of the first plate member, second openings of the holes provided in a second surface of the first plate member, and a communication portion configured to connect the first openings and the second openings to each other. The first openings and the second openings may be arranged close to each other in the first direction and in such a manner as to be displaced from each other when viewed from the first direction.

When the first openings and the second openings are arranged in such a manner as to be displaced from each other, the directions of the flow of the electrolyte are changed in the middle of the communication portion from the first openings to the second openings. Since the directions of the flow of the electrolyte are changed in the middle of the communication portion, even when the electrolyte is introduced into the respective first openings at different rates, a difference in the rates of the electrolyte is reduced in the communication portion, and the flow of the electrolyte discharged from each of second opening tends to become a laminar flow state. When the first openings and the second openings provided in the first plate member are arranged close to each other and in such a manner as to be displaced from each other, the configuration for changing the directions of the flow of the electrolyte is constructed by one plate member, and therefore, the first plate member is easy to handle.

(18) A tank structure according to an embodiment of the present disclosure includes the tank according to any one of the above (1) to (17), a first pipe connected to the inlet, a second pipe connected to the outlet, and a pump provided at the second pipe.

The tank structure in the present disclosure includes the tank according to the present disclosure, and thus the electrolyte in the tank can be efficiently used.

(19) A redox flow battery system according to an embodiment of the present disclosure includes the tank structure according to the above (18).

The redox flow battery system in the present disclosure includes the tank structure according to the present disclosure, and thus allows efficient use of the electrolyte in the tank and have a high energy density.

### [Details of Embodiments of Present Disclosure]

Specific examples of a tank, a tank structure, and a redox flow battery system of the present disclosure will be described with reference to the drawings. Hereinafter, the redox flow battery system may be referred to as an "RF battery system". In the drawings, the same reference numerals denote the same or corresponding parts. The present invention is not limited to these examples, but is defined by the scope of the claims, and is intended to include all modifications within the meaning and scope equivalent to the scope of the claims.

### <Tank>

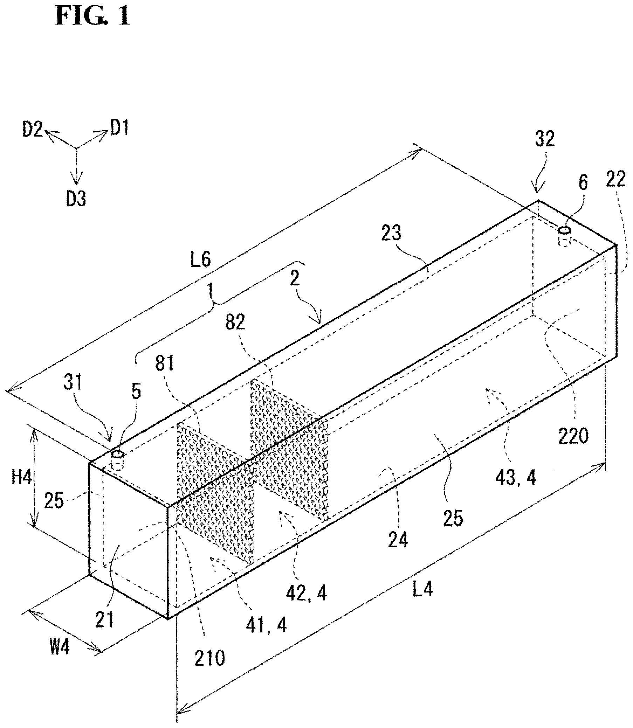

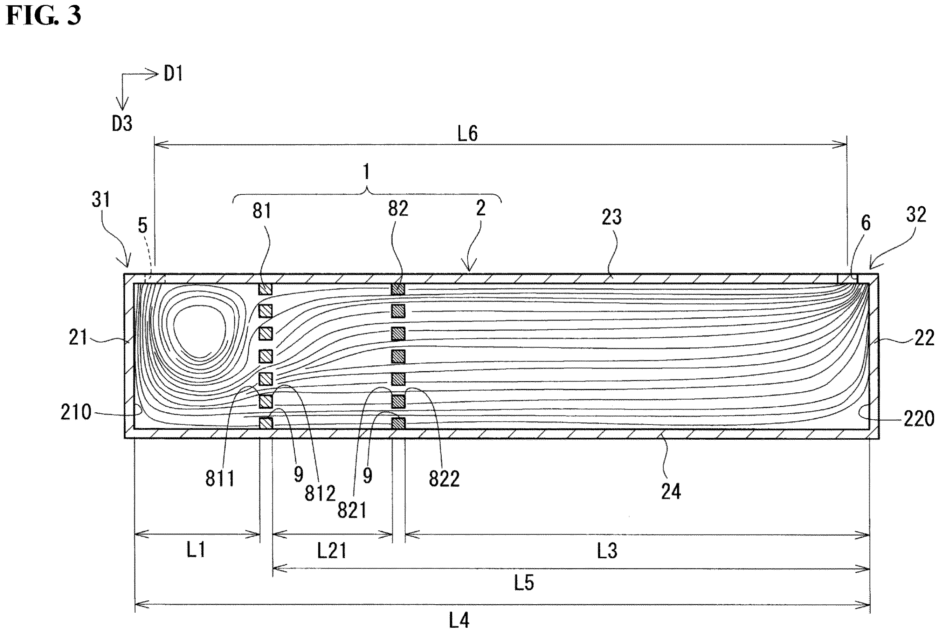

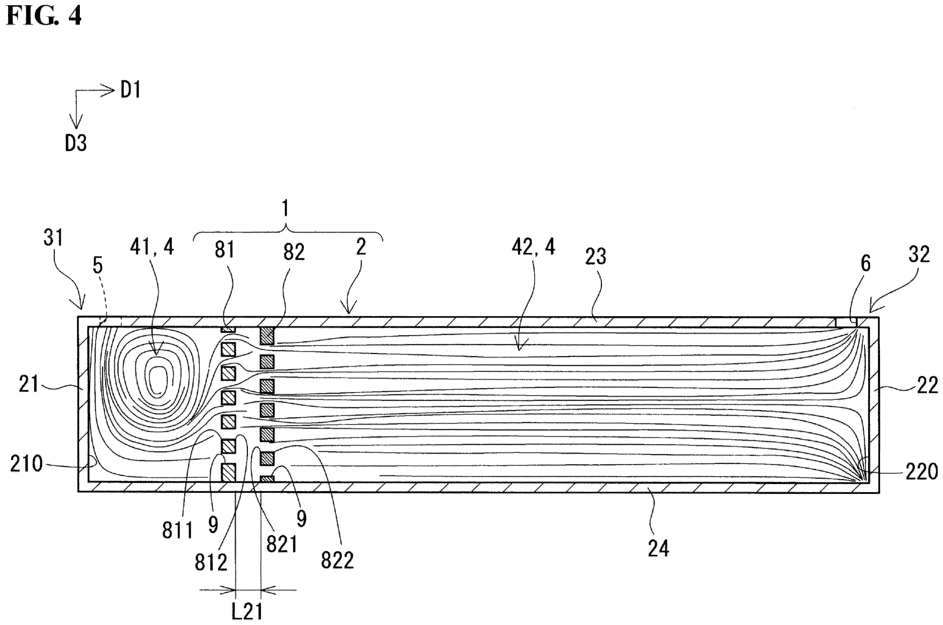

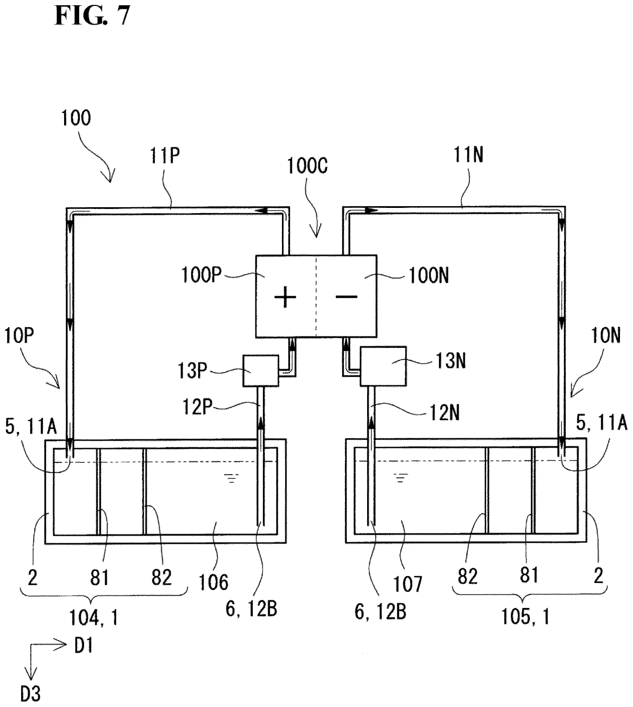

A tank 1 in an embodiment will be described with reference to FIG. 1 to FIG. 6. Tank 1 in the embodiment is a positive electrolyte tank 104 in which a positive electrolyte 106 is stored or a negative electrolyte tank 105 in which a negative electrolyte 107 is stored in an RF battery system 100, which will be described below with reference to FIG. 7. FIG. 1 shows a state of tank 1 in which positive electrolyte 106 or negative electrolyte 107 shown in FIG. 7 is not stored. FIG. 3 and FIG. 4 each schematically show the flow of an electrolyte, which is indicated by solid lines, in tank 1 in which positive electrolyte 106 or negative electrolyte 107 shown in FIG. 7 is stored. FIG. 3 is a cross-sectional view of tank 1, which is shown in FIG. 1, taken along a first direction D1 so as to include an outlet 6 for the electrolyte. FIG. 4 is a cross-sectional view of tank 1 taken at the same position as in FIG. 3. First direction D1 will be described later. In the following description of tank 1, positive electrolyte 106 and negative electrolyte 107 shown in FIG. 7 are not distinguished from each other and are each simply referred to as "electrolyte".

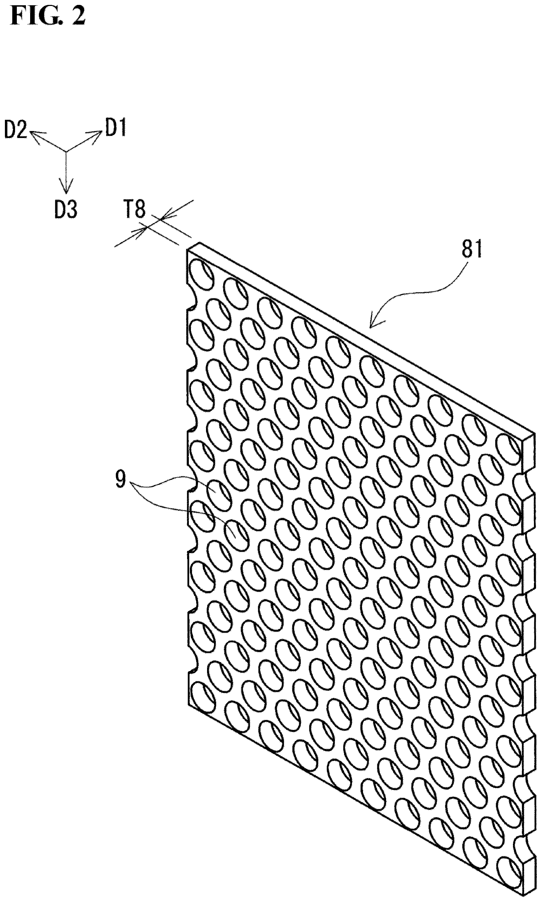

Tank 1 includes a tank body 2 as shown in FIG. 1, FIG. 3, and FIG. 4. One of the features of tank 1 in the embodiment is that tank 1 includes a first plate member 81. Tank 1 shown in FIG. 1, FIG. 3, and FIG. 4 further includes a second plate member 82. Hereinafter, tank body 2 will be described mainly with reference to FIG. 1, and first plate member 81 and second plate member 82 will be described in detail mainly with reference to FIG. 2 to FIG. 6.

### «Tank body»

As shown in FIG. 1, tank body 2 is a container having an internal space 4 in which the electrolyte is stored. A shape of tank body 2 is a columnar body. The columnar body is, for example, a prismatic body or a cylindrical body. The prismatic body is, for example, a quadrangular prismatic body. The quadrangular prismatic body includes a rectangular parallelepiped and a cube. A planar shape of each of two surfaces facing each other in the quadrangular prismatic body may be a quadrangle other than a square or a rectangle, for example, a rhombus or a trapezoid. Tank body 2 has a uniform cross-sectional shape in first direction D1 of tank body 2, for example. The shape of tank body 2 having a uniform cross-sectional shape in first direction D1 is, for example, a rectangular parallelepiped, a cube, or a cylinder. A shape of tank body 2 in the present example is a rectangular parallelepiped. In the present example, a shape of internal space 4 of tank body 2 is a rectangular parallelepiped as well. The rectangular parallelepiped herein includes a shape that can be generally regarded as a rectangular parallelepiped and, for example, may have rounded corners, or irregularities on a wall surface as in a container in accordance with the ISO standard, as well as a shape that satisfies the geometrical definition.

Tank body 2 has first direction D1, a second direction D2, and a third direction D3 expressed in a three dimensional orthogonal coordinate system. First direction D1 in the present example is a direction in which tank body 2 has the largest length. First direction D 1 in the present example is a direction in which internal space 4 of tank body 2 has the largest length as well. In tank body 2 having a rectangular parallelepiped shape, first direction D1 is a direction along a long side of tank body 2. First direction D1 in the present example is a direction perpendicular to a direction in which gravity acts. Second direction D2 in the present example is a direction along a width of tank body 2. Second direction D2 in the present example is also a direction along a width of internal space 4 of tank body 2. Third direction D3 in the present example is a direction along a height of tank body 2. Third direction D3 in the present example is also a direction along a height of internal space 4 of tank body 2. Tank body 2 in the present example is disposed horizontally long. In the present example, second direction D2 and third direction D3 are each orthogonal to first direction D1. In the present example, second direction D2 and third direction D3 are orthogonal to each other.

Tank body 2 in the present example includes a first end wall 21, a second end wall 22, an upper wall 23, a lower wall 24, and two side walls 25. First end wall 21 and second end wall 22 face each other in first direction D1. Upper wall 23 and lower wall 24 face each other in third direction D3. Two side walls 25 face each other in second direction D2. The thickness of each of first end wall 21, second end wall 22, upper wall 23, lower wall 24, and two side walls 25 may be selected as appropriate. Internal space 4 is a space surrounded by first end wall 21, second end wall 22, upper wall 23, lower wall 24, and two side walls 25.

A length L4 of internal space 4 in first direction D1 is, for example, 4.5 m to 12 m. Length L4 of internal space 4 is a length between a first surface 210 and a second surface 220 facing each other in first direction D1 shown in FIG. 3. First surface 210 is an inner surface of first end wall 21. Second surface 220 is an inner surface of second end wall 22. Since length L4 is 4.5 m or more, a large volume of the electrolyte is easily secured. When length L4 is 4.5 m or more, stagnation of the electrolyte is likely to occur. According to tank 1 in the present example, since tank 1 includes first plate member 81 described later, the flow of the electrolyte in tank 1 tends to become a laminar flow state, and stagnation of the electrolyte is unlikely to occur. The flow of the electrolyte in tank 1 in the present example will be described later. When length L4 is 12 m or less, it is possible to suppress an excessive increase in the size of tank 1. Length L4 may be 4.5 m to 11.5 m, 5 m to 11.5 m, or 6 m to 10 m.

A length of internal space 4 in second direction D2, that is, a width W4 of internal space 4 is, for example, 1 m to 3 m. Width W4 of internal space 4 is a length between inner surfaces of two side walls 25 facing each other in the second direction. When width W4 is 1 m or more, a large volume of the electrolyte is easily secured. When width W4 is 3 m or less, it is possible to suppress an excessive increase in the size of tank 1. Width W4 may be 1.5 m to 2.5 m.

A length of internal space 4 in third direction D3, that is, a height H4 of internal space 4 is, for example, 1 m to 3 m. Height H4 of internal space 4 is a length between two surfaces of upper wall 23 and lower wall 24 facing each other in third direction D3. When height H4 is 1 m or more, a large volume of the electrolyte is easily secured. When height H4 is 3 m or less, it is possible to suppress an excessive increase in the size of tank 1. Height H4 may be 1.5 m to 2.5 m.

Tank body 2 having a rectangular parallelepiped shape may be a 20-ft container type or a 40-ft container type tank in accordance with the ISO standard, for example. For the 40-ft container type, tank body 2 has a length of 12192 mm in first direction D1, a length of 2438 mm in second direction D2, and a length of 2591 mm in third direction D3. For a high cube 40-ft container type, tank body 2 has a length of 12192 mm in first direction D1, a length of 2438 mm in second direction D2, and a length of 2896 mm in third direction D3. The container type tank body 2 is excellent in terms of installability and transportability.

Tank body 2 includes an inlet 5 for the electrolyte and outlet 6 for the electrolyte. Inlet 5 and outlet 6 are provided away from each other in first direction D1.

Inlet 5 is provided at a first end portion 31 of tank body 2 in first direction D1. First end portion 31 includes a constituent member and a space of tank body 2 located within a distance equivalent to 25% of length L4 of internal space 4 from first surface 210 in first direction D1. First end portion 31 includes a portion of each of first end wall 21, upper wall 23, lower wall 24, and two side walls 25 within the above-described area. First end portion 31 includes a portion of internal space 4 within the above-described area. Inlet 5 shown in FIG. 1, FIG. 3, and FIG. 4 is a hole provided in upper wall 23. Inlet 5 extends through upper wall 23 along a thickness thereof. Inlet 5 shown in FIG. 7 is an opening end portion 11A of each of first pipes 11P and 11N which extend through upper wall 23 and provided in internal space 4. Inlet 5 shown in FIG. 7 is provided in internal space 4.

An axis of inlet 5 of the present example is parallel to third direction D3. The axis of inlet 5 of the present example intersects first direction D1 and, more specifically, is orthogonal to first direction D 1. The axis of inlet 5 may intersect first direction D 1 non-orthogonally. Inlet 5 of the present example is provided at an end of upper wall 23 in first end portion 31 in second direction D2. The position of inlet 5 in second direction D2 may be selected as appropriate. A shape of inlet 5 may be selected as appropriate.

Outlet 6 is provided at a second end portion 32 of tank body 2 in first direction D1. Second end portion 32 includes a constituent member and a space of tank body 2 located within a distance equivalent to 25% of length L4 of internal space 4 from second surface 220 in first direction D1. Second end portion 32 includes a portion of each of second end wall 22, upper wall 23, lower wall 24, and two side walls 25 within the above-described area. Second end portion 32 includes a portion of internal space 4 within the above-described area. Outlet 6 shown in FIG. 1, FIG. 3, and FIG. 4 is a hole provided in upper wall 23. Outlet 6 extends through upper wall 23 along a thickness thereof. Outlet 6 shown in FIG. 7 is an opening end portion 12B of each of second pipes 12P and 12N which extend through upper wall 23 and provided in internal space 4. Outlet 6 shown in FIG. 7 is provided in internal space 4.

An axis of outlet 6 of the present example is parallel to third direction D3. The axis of outlet 6 in the present example intersects first direction D1 and, more specifically, is orthogonal to first direction D1. The axis of outlet 6 may intersect first direction D1 non-orthogonally. Outlet 6 of the present example is provided at substantially the center of upper wall 23 in second end portion 32 in second direction D2. The position of outlet 6 in second direction D2 may be selected as appropriate. The shape of outlet 6 may be selected as appropriate.

A length L6 between inlet 5 and outlet 6 in first direction D1 is, for example, 3.2 m to 11.5 m. Length L6 between inlet 5 and outlet 6 is a length between a first plane and a second plane. The first plane is a plane that passes through the center of an opening shape of inlet 5 and is orthogonal to first direction D1. The second plane is a plane that passes through the center of an opening shape of outlet 6 and is orthogonal to first direction D1. When length L6 is 3.2 m or more, inlet 5 and outlet 6 can be easily arranged away from each other. When inlet 5 and outlet 6 are away from each other, it is easy to efficiently use the electrolyte in tank 1. When length L6 is 11.5 m or less, it is possible to suppress an excessive increase in the size of tank 1. Length L6 may be 3.2 m to 11 m, 4 m to 11 m, 4.5 m to 11 m, or 5.5 m to 9.5 m.

Length L6 between inlet 5 and outlet 6 in first direction D1 is, for example, 75% to 95% of length L4 of internal space 4 in first direction D1. When length L6 is 75% or more of length L4, inlet 5 and outlet 6 can be easily arranged away from each other. When inlet 5 and outlet 6 are away from each other, the electrolyte in tank 1 can be efficiently used. When length L6 is 95% or less of length L4, inlet 5 can be easily provided away from first end wall 21 at appropriate distance, and outlet 6 can be easily provided away from second end wall 22 at appropriate distance. Length L6 may be 85% to 90% of length L4.

### «Plate Member»

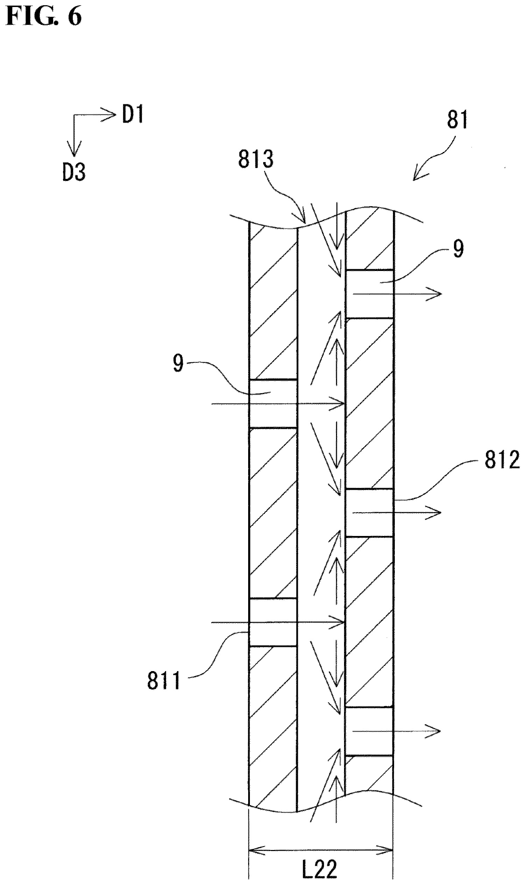

As shown in FIG. 1, FIG. 3, and FIG. 4, first plate member 81 and second plate member 82 are provided so as to partition internal space 4 of tank body 2 into a plurality of regions arranged in first direction D1. In FIG. 6, only first plate member 81 is shown.

### [First Embodiment]

First plate member 81 and second plate member 82 used in a first embodiment will be described with reference to FIG. 1 to FIG. 3. First plate member 81 is disposed closer to inlet 5 than second plate member 82. First plate member 81 and second plate member 82 are arranged with a relatively large gap L21 therebetween. Each of first plate member 81 and second plate member 82 is provided with holes 9 described later. The relatively large gap L21 has a length that is more than ten times the maximum equivalent circle diameter among the equivalent circle diameters of the plurality of holes 9 provided in each of first plate member 81 and second plate member 82.

Internal space 4 is partitioned into three regions, i.e., a first region 41, a second region 42, and a third region 43, by first plate member 81 and second plate member 82. First region 41 is formed between first end wall 21 and first plate member 81. Second region 42 is formed between first plate member 81 and second plate member 82. Third region 43 is formed between second plate member 82 and second end wall 22. First region 41 is provided with inlet 5. Third region 43 is provided with outlet 6.

In the first embodiment, first plate member 81 and second plate member 82 may have the same configuration. That is, the configuration of first plate member 81 can be applied to second plate member 82. Therefore, in the following description, the configuration common to both first plate member 81 and second plate member 82 will be described based on first plate member 81.

As shown in FIG. 2, first plate member 81 has a plurality of holes 9 that extend through first plate member 81 in first direction D1. Each of holes 9 is a flow channel for the electrolyte. First plate member 81 is disposed in tank body 2 in such a manner that the flow of the electrolyte is brought into a laminar flow state with each of holes 9. First plate member 81 may be disposed so as to be inclined with respect to first direction D1, that is, in such a manner that the surface of first plate member 81 intersects first direction D1. First plate member 81 in the present example is disposed in such a manner that the surface of first plate member 81 is orthogonal to first direction D 1.

A thickness T8 of first plate member 81 is, for example, 2 mm to 100 mm. When thickness T8 is 2 mm or more, mechanical strength of first plate member 81 is easily secured even when first plate member 81 has the plurality of holes 9. A length of each of holes 9 in first direction D 1 varies depending on the thickness of first plate member 81. A contact area between an inner peripheral surface of each of holes 9 and the electrolyte varies depending on the length of each of holes 9 in first direction D1. The direction or flow rate of the electrolyte flowing through each of holes 9 varies depending on the contact area. For example, the flow rate of the electrolyte flowing through each of holes 9 tends to decrease from a region near an axis of each of holes 9 toward the inner peripheral surface of each of holes 9. When the contact area is large, the amount of the electrolyte in contact with the inner peripheral surface of each of holes 9 or the amount of the electrolyte flowing in the range close to the inner peripheral surface of each of holes 9 increases, and thus the flow rate of the electrolyte tends to be low as a whole. When thickness T8 is 100 mm or less, the contact area does not become excessively large, the electrolyte easily flows in first direction D1, and the flow rate of the electrolyte is less likely to decrease. Thickness T8 of first plate member 81 may be 4 mm to 50 mm, or 5 mm to 20 mm.

Thickness T8 of first plate member 81 is, for example, 0.1% to 1% of length L4 of internal space 4 in first direction D1. When thickness T8 is 0.1% or more of length L4, the mechanical strength of first plate member 81 is easily secured even when first plate member 81 has the plurality of holes 9. When thickness T8 is 1% or less of length L4, the contact area between the inner peripheral surface of each of holes 9 and the electrolyte does not become excessively large as described above, the electrolyte easily flows in first direction D1, and the flow rate of the electrolyte is less likely to decrease. Thickness T8 may be 0.2% to 0.5% of length L4.

For example, as shown in FIG. 1 and FIG. 3, first plate member 81 is located closer to inlet 5 than the center of internal space 4 in first direction D 1. In other words, as shown in FIG. 3, a length L1 between first plate member 81 and first surface 210 of first end wall 21 is smaller than a length L5 between first plate member 81 and second surface 220 of second end wall 22. Since first plate member 81 is located closer to inlet 5 than the center of internal space 4, even when a vortex is formed by the flow of the electrolyte flowing in from inlet 5 as described later, a region where the vortex is formed can be limited within an area close to inlet 5 in internal space 4.

Length L1 between first plate member 81 and first surface 210 is, for example, 10% to 30% of the length between first surface 210 and second surface 220, that is, 10% to 30% of length L4 of internal space 4 in first direction D1. When length L1 is 10% or more of length L4, first region 41 can be sufficiently secured, the vortex is easily formed within first region 41, and formation of the vortex outside first region 41 is easily suppressed. When length L1 is 30% or less of length L4, the region where the vortex is formed can be limited within a small area close to inlet 5 in internal space 4. Length L1 may be 15% to 25% of length L4.

Second plate member 82 is not essential. That is, only first plate member 81 may be disposed. When second plate member 82 is disposed in addition to first plate member 81, the flow of the electrolyte in tank 1 tends to become a laminar flow state as described later. In addition to first plate member 81 and second plate member 82, a third plate member (not shown) may be further disposed. When the number of plate members increases, since the number of times the electrolyte passes through holes 9 increases, the total contact area between the inner peripheral surface of each of holes 9 and the electrolyte increases, and the flow rate of the electrolyte tends to be low as a whole. When the number of plate members is 5 or less, the number of times the electrolyte passes through holes 9 does not become excessively large, and the flow rate of the electrolyte is less likely to decrease. The number of plate members may be 2 to 4, or 2 to 3.

When a plurality of plate members are provided in tank body 2, the total thickness of the plate members is, for example, 0.4% to 2.5% of length L4 of internal space 4 in first direction D1. When the total thickness is 0.4% or more of length L4, the flow of the electrolyte in tank 1 tends to become a laminar flow state as described later. When the total thickness is 2.5% or less of length L4, the total contact area between the inner peripheral surface of each of holes 9 and the electrolyte is not excessively large as described above, and the flow rate of the electrolyte is less likely to decrease. The total thickness may be 1% to 2% of length L4.

When the plurality of plate members are provided in tank body 2, the plate member closest to outlet 6, that is, second plate member 82 in the present example, is located at the center of internal space 4 in first direction D 1 or in a region closer to inlet 5 than the center, as shown in FIG. 1 and FIG. 3. Since second plate member 82 is located at the center of internal space 4 or in the region closer to inlet 5 than the center, the electrolyte passing through second plate member 82 easily flows toward outlet 6 in a laminar flow state.

As shown in FIG. 3, a length L3 between second plate member 82 and second surface 220 is, for example, 40% to 80% of the length between first surface 210 and second surface 220, that is, 40% to 80% of length L4 of internal space 4 in first direction D1. When length L3 is 40% or more of length L4, third region 43 can be sufficiently secured, and the electrolyte passing through second plate member 82 easily flows toward outlet 6 in a laminar flow state. When length L3 is 80% or less of length L4, relatively, first region 41 can be sufficiently secured. Length L3 may be 50% to 70% of length L4.

First plate member 81 has a plurality of holes 9 as shown in FIG. 2. Each of holes 9 extends through first plate member 81 in first direction D1. In a case where first plate member 81 and second plate member 82 are disposed, as shown in FIG. 3, each of first plate member 81 and second plate member 82 has a plurality of holes 9.

As shown in FIG. 3, first plate member 81 has first openings 811 through which the electrolyte is introduced and second openings 812 through which the electrolyte is discharged. Holes 9 provided in first plate member 81 connect first openings 811 and second openings 812 to each other. The electrolyte flows from first openings 811 toward second openings 812. In first plate member 81, holes 9 discharge the electrolyte introduced into first openings 811 from second openings 812. In holes 9, at least parts of paths close to first openings 811 and parts of the paths close to second openings 812 among the paths from first openings 811 to second openings 812 are parallel to first direction D 1. In other words, the parts of the paths close to first openings 811 and the parts of the paths close to second openings 812 among the paths are provided in a straight line parallel to first direction D1. The central parts of the paths may be parallel to first direction D1, or may intersect first direction D1 orthogonally or non-orthogonally. Holes 9 in the present example are provided in such a manner that the entire paths are in a straight line parallel to first direction D1. Each of holes 9 in the present example extends through first plate member 81 along the thickness thereof.

Second plate member 82 has first openings 821 through which the electrolyte is introduced and second openings 822 through which the electrolyte is discharged, as in first plate member 81. Holes 9 provided in second plate member 82 connect first openings 821 and second openings 822 to each other. The electrolyte flows from first openings 821 toward second openings 822. In second plate member 82, holes 9 discharge the electrolyte introduced into first openings 821 from second openings 822. In the present example, holes 9 provided in second plate member 82 are provided in such a manner that the entire paths are in a straight line parallel to first direction D1, as in holes 9 provided in first plate member 81. The electrolyte is brought into a laminar flow state in first direction D1 with holes 9 in first plate member 81 and is brought into a laminar flow state in first direction D1 with holes 9 in second plate member 82.

In each of first plate member 81 and second plate member 82 in the present example, peripheral edges of first openings 810 and peripheral edges of second openings 820 overlap each other without being displaced when viewed from first direction D1.

In first plate member 81, a shape of each of holes 9 may be selected as appropriate. The shape of each of holes 9 is a shape of an opening of each of holes 9 in a cross section orthogonal to first direction D1. The shape of each of holes 9 is a shape of each of first openings 811 or a shape of each of second openings 812. In first plate member 81, the shapes of the plurality of holes 9 may be the same or different. In the present example, the shapes of the plurality of holes 9 are all circular.

The equivalent circle diameter of each of holes 9 is, for example, one time to ten times thickness T8 of first plate member 81. The equivalent circle diameter of each of holes 9 is the diameter of a perfect circle having the same area as a cross-sectional area of each of holes 9. The cross-sectional area of each of holes 9 is an area of each of holes 9 in a cross section when first plate member 81 is cut in a direction orthogonal to first direction D1 of each of holes 9. When the equivalent circle diameter of each of holes 9 is greater than or equal to one time thickness T8, the electrolyte is less likely to be diffusely reflected from the inner peripheral surface of each of holes 9, and the direction in which the electrolyte flows when flowing through each of holes 9 is likely to be first direction D1. When the equivalent circle diameter of each of holes 9 is less than or equal to ten times thickness T8, the flow of the electrolyte is easily adjusted by each of holes 9, and the direction in which the electrolyte flows when flowing through each of holes 9 tends to be first direction D1. The equivalent circle diameter of each of holes 9 may be one time to five times, or one time to 1.4 times thickness T8. In first plate member 81, the equivalent circle diameters of holes 9 may be the same or different.

In first plate member 81, the plurality of holes 9 are provided in a dispersed manner. The expression of the plurality of holes 9 being dispersed means that the plurality of holes 9 are not provided unevenly in first plate member 81 but are provided uniformly over the entire first plate member 81. For example, holes 9 adjacent to each other are provided with a certain degree of a gap therebetween. In first plate member 81, holes 9 having different equivalent circle diameters may be arranged at random. In first plate member 81, holes 9 having different equivalent circle diameters may be regularly arranged. For example, small holes 9 may be provided near an upper edge of first plate member 81, and large holes 9 may be provided near a lower edge of first plate member 81.

In first plate member 81, a ratio of a total area of the plurality of holes 9 to an area within an outer peripheral edge of first plate member 81 is, for example, 30% to 70%. The area within the outer peripheral edge of first plate member 81 includes the total area of the plurality of holes 9. When the ratio is 30% or more, the flow of the electrolyte is easily brought into a laminar flow state without inhibiting the flow of the electrolyte. When the ratio is 70% or less, the mechanical strength of first plate member 81 is easily secured. The ratio may be 40% to 60%.

The shapes of holes 9, the equivalent circle diameters of holes 9, and the ratios may be the same or different for first plate member 81 and second plate member 82. When viewed from first direction D1, the positions of holes 9 may overlap or may be displaced between first plate member 81 and second plate member 82. In the present example, the shapes of holes 9, the equivalent circle diameters of holes 9, and the ratios are the same for first plate member 81 and second plate member 82. In the present example, the positions of holes 9 are the same between first plate member 81 and second plate member 82 when viewed from first direction D1.

### «Flow of Electrolyte»

The flow of the electrolyte in tank 1 described above in which the electrolyte is stored will be described with reference to FIG. 3. The electrolyte is circulated between tank 1 and a battery cell 100C shown in FIG. 7. The electrolyte flows out from outlet 6 and flows in from inlet 5. The electrolyte shown in FIG. 3 is filled in tank body 2.

The electrolyte flowing from battery cell 100C toward tank 1 shown in FIG. 7 flows into tank body 2 from inlet 5 in third direction D3. The electrolyte flowing into tank body 2 from inlet 5 draws a track such that the electrolyte flows downward in first region 41 in third direction D3 and then flows in first direction D1. The electrolyte stored in tank body 2 forms a vortex so as to be mixed with the electrolyte flowing into tank body 2 from inlet 5. The vortex is formed in first region 41. The electrolyte in first region 41 forms the vortex, and flows into second region 42 through the plurality of holes 9 provided in first plate member 81. The electrolyte flows from first region 41 into second region 42, and thus the electrolyte in second region 42 flows into third region 43 through the plurality of holes 9 provided in second plate member 82. The electrolyte flows from second region 42 into third region 43, and thus the electrolyte in third region 43 flows out from outlet 6. That is, the electrolyte in tank body 2 is pushed by the electrolyte flowing in from inlet 5 to flow from inlet 5 to outlet 6 while passing through holes 9 in first plate member 81 and second plate member 82. Since each of holes 9 extends through in first direction D1, the flow of the electrolyte through each of holes 9 in first plate member 81 and second plate member 82 becomes a laminar flow state in first direction D1. That is, the flow of the electrolyte flowing through second region 42 and third region 43 is in a laminar flow state.

### [Second Embodiment]

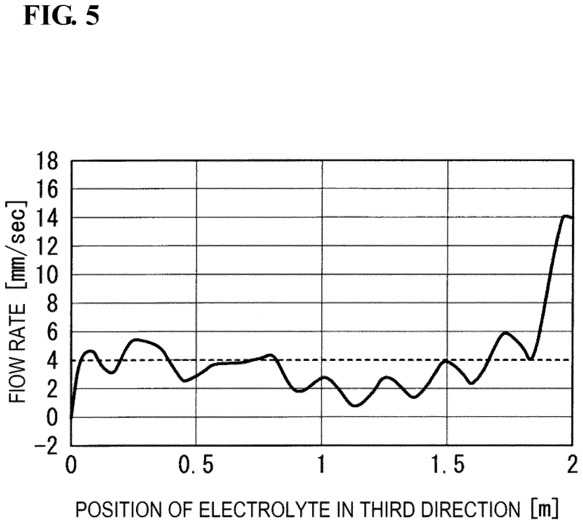

First plate member 81 and second plate member 82 used in a second embodiment will be described with reference to FIG. 4 and FIG. 5. First plate member 81 and second plate member 82 are arranged close to each other in first direction D1. The expression of being arranged close to each other means that gap L21 between first plate member 81 and second plate member 82 is less than or equal to ten times the maximum equivalent circle diameter among the equivalent circle diameters of the plurality of holes 9 provided in each of first plate member 81 and second plate member 82. The expression of being close to each other includes first plate member 81 and second plate member 82 being arranged with gap L21 therebetween or being in contact with each other. Gap L21 may be less than or equal to eight times, less than or equal to five times, or less than or equal to three times the maximum equivalent circle diameter. When first plate member 81 and second plate member 82 are arranged close to each other, a space between first plate member 81 and second plate member 82 is not counted as a partitioned region in internal space 4 and is ignored.

In the present example, internal space 4 is partitioned into two regions, that is, first region 41 and second region 42, by first plate member 81 and second plate member 82. First region 41 is formed between first end wall 21 and first plate member 81. Second region 42 is formed between second plate member 82 and second end wall 22. First region 41 is provided with inlet 5. Second region 42 is provided with outlet 6.

In the second embodiment, first plate member 81 and second plate member 82 are different from each other in the positions of holes 9 when viewed from first direction D1. The configurations of the first embodiment other than the above configuration can be applied to the second embodiment.

For example, as shown in FIG. 4, first plate member 81 and second plate member 82 are located closer to inlet 5 than the center of internal space 4 in first direction D1. In the present example, both first plate member 81 and second plate member 82 are arranged at substantially the same positions as first plate member 81 described in the first embodiment. A thickness of each of first plate member 81 and second plate member 82 is the same as, for example, thickness T8 of first plate member 81 described in the first embodiment. The thickness of first plate member 81 and the thickness of second plate member 82 may be the same or different. First plate member 81 and second plate member 82 are arranged, for example, in parallel to each other. First plate member 81 and second plate member 82 are arranged, for example, in such a manner that both the surface of first plate member 81 and the surface of second plate member 82 are orthogonal to first direction D1.

First plate member 81 and second plate member 82 have a plurality of holes 9 that extend through first plate member 81 and second plate member 82, respectively, in first direction D1. Each of holes 9 is a flow channel for the electrolyte. Shapes and equivalent circle diameters of holes 9 are the same as those of holes 9 described in the first embodiment. The shapes of holes 9, the equivalent circle diameters of holes 9, and the ratios of a total area of the plurality of holes 9 to an area within an outer peripheral edge of each of plate members 81 and 82 may be the same or different for first plate member 81 and second plate member 82.

First plate member 81 has first openings 811 through which the electrolyte is introduced and second openings 812 through which the electrolyte is discharged. Holes 9 connect first openings 811 and second openings 812 to each other. The electrolyte flows from first openings 811 toward second openings 812. Holes 9 provided in first plate member 81 are provided, for example, in such a manner that the entire paths from first openings 811 to second openings 812 are in a straight line parallel to first direction D1.

Second plate member 82 has first openings 821 through which the electrolyte is introduced and second openings 822 through which the electrolyte is discharged. Holes 9 connect first openings 821 and second openings 822 to each other. The electrolyte flows from first openings 821 toward second openings 822. Holes 9 provided in second plate member 82 are provided, for example, in such a manner that the entire paths from first openings 821 toward second openings 822 are in a straight line shape parallel to first direction D1.

First openings 811 of first plate member 81 and second openings 822 of second plate member 82 are arranged in such a manner as to be displaced from each other when viewed from first direction D1. In other words, when viewed from first direction D1, peripheral edges of first openings 811 and peripheral edges of second openings 822 have portions that do not overlap with each other. In the present example, the peripheral edges of first openings 811 and the peripheral edges of second openings 822 are not overlapped with each other over the entire peripheries and are displaced from each other. First openings 811 and second opening 822 may be completely displaced from each other or may have portions slightly overlapping with each other when viewed from first direction D1.

A structure in which first plate member 81 and second plate member 82 are arranged close to each other and first openings 811 and second openings 822 are arranged in such a manner as to be displaced from each other is referred to as a first specific structure. In tank 1 having the first specific structure, the directions of the flow of the electrolyte are changed in the middle of the paths from first openings 811 toward second openings 822. When the directions of the flow of the electrolyte are changed in the middle of the paths, even if the electrolyte is introduced into respective first openings 811 at different rates, the difference in the rates of the electrolyte is reduced in the middle of the paths. Half or more, or all of the plurality of holes 9 may be provided so as to construct the first specific structure. In tank 1 having the first specific structure, the flow of the electrolyte discharged from each of second openings 822 tends to become a laminar flow state.

A flow rate distribution of the electrolyte in tank 1 provided with first plate member 81 and second plate member 82 in the second embodiment is shown in the graph in FIG. 5. This graph shows a relationship between a position of the electrolyte and a flow rate at that position in a state where the electrolyte is filled in tank body 2 shown in FIG. 4. A horizontal axis of the graph represents the position in third direction D3 at a position of 3 m away from first end wall 21 shown in FIG. 4 in first direction D1. First plate member 81 and second plate member 82 are provided at positions of approximately 2 m away from first end wall 21 in first direction D 1. A vertical axis of the graph is the flow rate of the electrolyte. In the graph, the dashed line indicates an average flow rate, and the solid line indicates an actual flow rate. As shown in FIG. 5, it is found that in tank 1 including first plate member 81 and second plate member 82 in the second embodiment, the flow rate is maintained substantially constant regardless of the position of the electrolyte in third direction D3. Although not shown, in a case where only first plate member 81 shown in FIG. 2 is disposed at a position of approximately 2 m away from first end wall 21 in first direction D1, when the flow rate of the electrolyte introduced into tank 1 is high, the flow rate varies. That is, it is found that in tank 1 including first plate member 81 and second plate member 82 in the second embodiment, the electrolyte can be brought into a laminar flow state even at a high flow rate, as compared with the case where one first plate member 81 not including the first specific structure shown in FIG. 2 is disposed.

### [Third Embodiment]

First plate member 81 used in a third embodiment will be described with reference to FIG. 6. FIG. 6 shows a part of first plate member 81 in an enlarged manner. First plate member 81 shown in FIG. 6 is a single plate member. First plate member 81 shown in FIG. 6 has first openings 811 of holes 9 provided in a first surface of first plate member 81, second openings 812 of holes 9 provided in a second surface of first plate member 81, and communication portion 813 connecting first openings 811 and second openings 812 to each other. Each of first openings 811 and each of second openings 812 is opened in first direction D1. First openings 811 and second openings 812 are arranged close to each other in first direction D1, and are arranged in such a manner as to be displaced from each other when viewed from first direction D1. A gap L22 between first openings 811 and second openings 812 in first direction D1 is less than or equal to ten times the maximum equivalent circle diameter among the equivalent circle diameters of the plurality of holes 9. Gap L22 is equal to the thickness of first plate member 81. In the present example, the peripheral edges of first openings 811 and the peripheral edges of second openings 812 are not overlapped with each other over the entire peripheries and are displaced from each other. First plate member 81 shown in FIG. 6 is provided with a space extending in a direction orthogonal to first direction D1 inside first plate member 81. This space is a part of communication portion 813.

A structure in which first openings 811 and second openings 812 are arranged close to each other in first direction D1 and are arranged in such a manner to be displaced from each other when viewed from first direction D1 is referred to as a second specific structure. In tank 1 having the second specific structure, the directions of the flow of the electrolyte are changed in the middle of the paths from first openings 811 to second openings 812, as in the second embodiment. The arrows shown in FIG. 6 indicate the directions of flow of the electrolyte. When the directions of the flow of the electrolyte are changed in the middle of the paths, even if the electrolyte is introduced into respective first openings 811 at different rates, the difference in the rates of the electrolyte is reduced in the middle of the paths.

First plate member 81 shown in FIG. 6 may be a plate member having first openings 811, second openings 812, and the space and may be a known water-permeable sheet, for example. First plate member 81 shown in FIG. 6 is formed by, for example, joining two plate members. Each of the two plate members is provided with, for example, a recessed portion and a plurality of holes. The recessed portion is provided on each of surfaces facing each other of the two plate members. One recessed portion may be provided in a central portion of the plate member except for a peripheral portion. The recessed portion may be a plurality of grooves extending in a direction orthogonal to first direction D1. Each of the holes has an opening at a bottom of the recessed portion. Each of the holes is provided in first direction D1. When the two plate members are joined together with the grooves of the two plate members aligned with each other, first plate member 81 shown in FIG. 6 is obtained. The recessed portions provided in the two plate members are aligned with each other, and thus the space is provided inside first plate member 81. One of the two plate members may be provided with a plurality of holes, and the other of the two plate members may be provided with the recessed portion and a plurality of holes. When the second specific structure is provided in first plate member 81, the configuration for changing the directions of the flow of the electrolyte is constructed by one plate member, and thus first plate member 81 is easy to handle.

First plate member 81 or second plate member 82 in the first embodiment may be provided so as to construct the first specific structure described in the second embodiment or may be provided so as to construct the second specific structure described in the third embodiment. Both first plate member 81 and second plate member 82 in the first embodiment may be provided so as to construct the first specific structure or may be provided so as to construct the second specific structure.

### <Tank Structure>

Tank structures 10P and 10N in the embodiment will be described with reference to FIG. 7. Directions shown in a lower left in FIG. 7 indicate arrangement directions of tank 1. The directions shown in the lower left in FIG. 7 do not indicate the arrangement directions of battery cell 100C. Tank structure 10P circulates positive electrolyte 106. Tank structure 10N circulates negative electrolyte 107.

Tank structure 10P includes tank 1 described above, first pipe 11P, second pipe 12P, and a pump 13P. Tank 1 shown in FIG. 7 is tank 1 shown in FIG. 3. Positive electrolyte 106 is stored in tank 1. Hereinafter, tank 1 in which positive electrolyte 106 is stored is referred to as positive electrolyte tank 104.

First pipe 11P is a pipe for returning positive electrolyte 106 from battery cell 100C to positive electrolyte tank 104. First pipe 11P in the present example is connected to tank body 2 in such a manner that opening end portion 11A of first pipe 11P is disposed inside tank body 2. Inlet 5 for positive electrolyte 106 into positive electrolyte tank 104 is opening end portion 11A of first pipe 1 1P. Inlet 5 in the present example is disposed closer to upper wall 23 than the center of tank body 2 in third direction D3. Inlet 5 in the present example is disposed so as not to be immersed in positive electrolyte 106.

Second pipe 12P is a pipe for sending positive electrolyte 106 from positive electrolyte tank 104 to battery cell 100C. Second pipe 12P in the present example is connected to tank body 2 in such a manner that opening end portion 12B of second pipe 12P is disposed inside tank body 2. Outlet 6 for positive electrolyte 106 from positive electrolyte tank 104 is opening end portion 12B of second pipe 12P. Outlet 6 in the present example is disposed closer to lower wall 24 than the center of tank body 2 in third direction D3. Outlet 6 in the present example is disposed so as to be immersed in positive electrolyte 106.

Pump 13P is provided in the middle of second pipe 12P. Pump 13P pumps positive electrolyte 106 in positive electrolyte tank 104 to battery cell 100C.

Tank structure 10N includes tank 1 described above, first pipe 11N, second pipe 12N, and a pump 13N. Tank structure 10N has the same configuration as tank structure 10P except that the electrolyte to be flowed is different. First pipe 11N, second pipe 12N, and pump 13N in tank structure 10N have the same configurations as first pipe 11P, second pipe 12P, and pump 13P in tank structure 10P, respectively. Negative electrolyte 107 is stored in tank 1 of tank structure 10N. Hereinafter, tank 1 in which negative electrolyte 107 is stored is referred to as negative electrolyte tank 105.

As the basic configurations of first pipes 11P and 11N, second pipes 12P and 12N, and pumps 13P and 13N, known configurations may be used as appropriate.

### <RF Battery System>

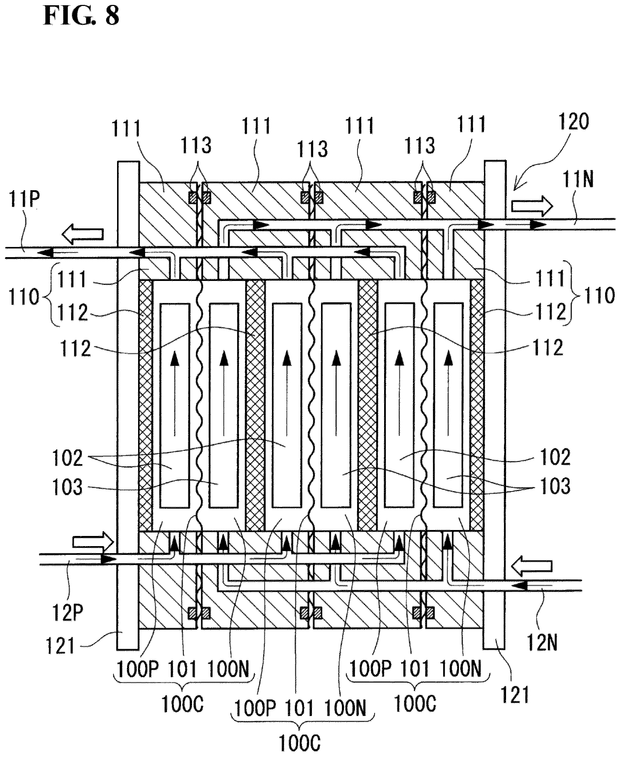

RF battery system 100 in the embodiment will be described with reference to FIG. 7 and FIG. 8. As shown in FIG. 7, RF battery system 100 includes battery cell 100C, tank structure 10P described above, and tank structure 10N described above. In FIG. 7, battery cell 100C is shown in a simplified manner, and the positive electrode of battery cell 100C is indicated by "+" and the negative electrode of battery cell 100C is indicated by "-". A specific configuration of battery cell 100C is shown in FIG. 8.

RF battery system 100 charges and stores electric power generated by a power generation unit, and discharges the stored electric power to supply a load. RF battery system 100 is typically connected to the power generation unit and the load through a power conversion device and a transformer facility. An example of the power generation unit is a solar photovoltaic power generator, a wind power generator, or other general power plants. An example of the load is a consumer of electric power. An example of the application of RF battery system 100 is load leveling, voltage sag compensation, emergency power supply, or output smoothing for natural energy.

As shown in FIG. 8, battery cell 100C is divided into a positive electrode cell 100P and a negative electrode cell 100N by a membrane 101. A positive electrode 102 is included in positive electrode cell 100P. Positive electrolyte 106 is supplied to positive electrode cell 100P. A negative electrode 103 is included in negative electrode cell 100N. Negative electrolyte 107 is supplied to negative electrode cell 100N. Battery cell 100C is formed by being sandwiched between a pair of cell frames 110. Cell frame 110 includes a bipolar plate 112 and a frame body 111. Positive electrode 102 is disposed on a first surface of bipolar plate 112, and negative electrode 103 is disposed on a second surface of bipolar plate 112. Frame body 111 is provided at an outer periphery of bipolar plate 112. Bipolar plate 112 is supported by frame body 111. A sealing member 113 is disposed between frame bodies 111 to suppress leakage of positive electrolyte 106 and negative electrolyte 107 from battery cell 100C.

RF battery system 100 is typically used in a form called a cell stack 120 in which a plurality of battery cells 100C are stacked. Cell stack 120 includes a layered body in which cell frame 110, positive electrode 102, membrane 101, negative electrode 103, and another cell frame 110 are repeatedly layered, two end plates 121 sandwiching the layered body, and a fastening member (not shown). The fastening member is, for example, a long bolt and a nut. Two end plates 121 are fastened by the fastening member. The layered state of the layered body is maintained by this fastening. Cell stack 120 is typically used in a form in which a plurality of substack are stacked with a predetermined number of battery cells 100C as a substack (not shown). Supply/drainage plates (not shown) are disposed in contact with outer surfaces of cell frames 110 located at both ends in a stacking direction of battery cells 100C in the substack or cell stack 120.

As shown in FIG. 7, positive electrolyte 106 is circulated through positive electrode cell 100P by tank structure 10P. Positive electrolyte 106 is supplied from positive electrolyte tank 104 to positive electrode 102 shown in FIG. 8 through second pipe 12P by the pumping of pump 13P. Positive electrolyte 106 that has flowed through positive electrode 102 is returned to positive electrolyte tank 104 through first pipe 11P. Positive electrolyte 106 flows in positive electrolyte tank 104 from inlet 5 to outlet 6 in a laminar flow state as indicated by the solid line in FIG. 3. When pump 13P is stopped, positive electrolyte 106 is not circulated.

As shown in FIG. 7, negative electrolyte 107 is circulated through negative electrode cell 100N by tank structure 10N. Negative electrolyte 107 is supplied from negative electrolyte tank 105 to negative electrode 103 shown in FIG. 8 through second pipe 12N by the pumping of pump 13N. Negative electrolyte 107 that has flowed through negative electrode 103 is returned to negative electrolyte tank 105 through first pipe 11N. Negative electrolyte 107 flows in negative electrolyte tank 105 from inlet 5 to outlet 6 in a laminar flow state as indicated by the solid line in FIG. 3. When pump 13N is stopped, negative electrolyte 107 is not circulated.

RF battery system 100 performs charging and discharging in accordance with a valence change reaction of active material ions in the electrolytes of the respective electrodes by circulating positive electrolyte 106 through positive electrode 102 and circulating negative electrolyte 107 through negative electrode 103.

Positive electrolyte 106 contains, for example, one or more selected from the group consisting of manganese ions, vanadium ions, iron ions, polyacids, quinone derivatives, and amines as positive electrode active materials. Negative electrolyte 107 contains, for example, one or more selected from the group consisting of titanium ions, vanadium ions, chromium ions, polyacids, quinone derivatives, and amines as negative electrode active materials. A solvent for positive electrolyte 106 and negative electrolyte 107 is, for example, an aqueous solution containing one or more acids selected from the group consisting of sulfuric acid, phosphoric acid, nitric acid, and hydrochloric acid or acid salts thereof. In a specific example, both positive electrolyte 106 and negative electrolyte 107 include vanadium ions. Concentrations of the positive electrode active materials and concentrations of the negative electrode active materials may be selected as appropriate.

As the basic configuration of RF battery system 100 described above, known configurations may be used as appropriate.

In tank 1 in the embodiment and tank structures 10P and 10N in the embodiment, even when the vortex is formed by the electrolyte flowing in from inlet 5, the region where the vortex is formed can be limited within first region 41. First region 41 in the present example is located in a region closer to inlet 5 than the center of internal space 4 in first direction D1, and furthermore in a region within 30% or less of length L4 of internal space 4 in first direction D1. Therefore, in tank 1 and tank structures 10P and 10N in the embodiment, the region where the vortex is formed can be limited within a small area in internal space 4. The electrolyte passes through the plurality of holes 9 when flowing from first region 41 into second region 42 and when flowing from second region 42 into third region 43. Since each of holes 9 extends through the first plate member 81 and the second plate member 82 in first direction D1, the flow of the electrolyte from second region 42 toward outlet 6 tends to become a laminar flow state in first direction D 1. Since the flow of the electrolyte is a laminar flow, turbulent flow, shortcut of the flow, and stagnation are unlikely to occur in the electrolyte. The shortcut of the flow of the electrolyte means that the electrolyte returned from battery cell 100C is supplied again from tank 1 to battery cell 100C while being hardly mixed with the electrolyte present originally in tank 1. The stagnation of the electrolyte means that, for example, the electrolyte in a region at the corner of tank 1 is hardly mixed with the electrolyte in the other regions and stays in tank 1. Since the flow of the electrolyte is a laminar flow, the electrolyte in tank 1 can be efficiently used.

When at least one of the following conditions (1) to (4) is satisfied, turbulent flow, shortcut of flow, or stagnation is likely to occur in the electrolyte in the tank. (1) Tank body 2 is horizontally long. (2) The direction along a long side of internal space 4 of tank body 2 having a rectangular parallelepiped shape is first direction D1. (3) The direction perpendicular to the direction in which gravity acts is first direction D1. (4) The axis of inlet 5, that is, the direction in which the electrolyte flows, intersects first direction D1. In tank 1 in the embodiment and tank structures 10P and 10N in the embodiment, even when the above condition is satisfied, the flow of the electrolyte tends to become a laminar flow state in first direction D1. That is, in tank 1 in the embodiment and tank structures 10P and 10N in the embodiment, even when the above condition is satisfied, the effect of efficiently using the electrolyte can be exhibited more significantly.

RF battery system 100 in the embodiment includes tank structures 10P and 10N in the embodiment, and thus can efficiently use positive electrolyte 106 in positive electrolyte tank 104 and can efficiently use negative electrolyte 107 in negative electrolyte tank 105. Therefore, RF battery system 100 in the embodiment has a high energy density.

### REFERENCE SIGNS LIST

1 tank
2 tank body
21 first end wall, 22 second end wall, 23 upper wall, 24 lower wall, 25 side wall
210 first surface, 220 second surface
31 first end portion, 32 second end portion
4 internal space, 41 first region, 42 second region, 43 third region
5 inlet, 6 outlet
81 first plate member, 811 first opening, 812 second opening, 813 communication portion
82 second plate member, 821 first opening, 822 second opening
9 hole
D1 first direction, D2 second direction, D3 third direction
L1, L3, L4, L5, L6 length, L21, L22 gap
W4 width, H4 height, T8 thickness
10P, 10N tank structure
11P, 11N first pipe, 11A opening end portion
12P, 12N second pipe, 12B opening end portion
13P, 13N pump
100 redox flow battery system (RF battery system)
100C battery cell
101 membrane
100P positive electrode cell, 100N negative electrode cell
102 positive electrode 103 negative electrode
104 positive electrolyte tank, 105 negative electrolyte tank
106 positive electrolyte, 107 negative electrolyte
110 cell frame, 111 frame body, 112 bipolar plate, 113 sealing member
120 cell stack, 121 end plate

## Claims

1. A tank configured to store an electrolyte of a redox flow battery system, the tank comprising:
a tank body; and
a first plate member configured to partition an internal space of the tank body into a plurality of regions arranged in a first direction,
wherein the tank body includes
an inlet for the electrolyte, the inlet being provided at a first end portion of the tank body in the first direction, and
an outlet for the electrolyte, the outlet being provided at a second end portion of the tank body in the first direction, and
wherein the first plate member has a plurality of holes extending through the first plate member in the first direction.

2. The tank according to claim 1,
wherein the tank body has a uniform cross-sectional shape in the first direction.

3. The tank according to claim 1 or claim 2,
wherein a shape of the tank body is a rectangular parallelepiped, and
wherein the first direction is a direction along a long side of the tank body.

4. The tank according to any one of claim 1 to claim 3,
wherein an equivalent circle diameter of each of the plurality of holes is one time to ten times a thickness of the first plate member.

5. The tank according to any one of claim 1 to claim 4,
wherein a thickness of the first plate member is 2 mm to 100 mm.

6. The tank according to any one of claim 1 to claim 5,
wherein a thickness of the first plate member is 0.1% to 1% of a length of the internal space in the first direction.

7. The tank according to any one of claim 1 to claim 6,
wherein a length of the internal space in the first direction is 4.5 m to 12 m.

8. The tank according to any one of claim 1 to claim 7,
wherein a length between the inlet and the outlet in the first direction is 3.2 m to 11.5 m.

9. The tank according to any one of claim 1 to claim 8,
wherein a length between the inlet and the outlet in the first direction is 75% to 95% of a length of the internal space in the first direction.

10. The tank according to any one of claim 1 to claim 9,
wherein a ratio of a total area of openings of the plurality of holes to an area within an outer peripheral edge of the first plate member is 30% to 70%.

11. The tank according to any one of claim 1 to claim 10,
wherein the first direction is a direction perpendicular to a direction in which gravity acts.

12. The tank according to any one of claim 1 to claim 11,
wherein an axis of the inlet and an axis of the outlet each intersect the first direction.

13. The tank according to any one of claim 1 to claim 12,
wherein the tank body has a first surface and a second surface facing each other in the first direction,
wherein the first surface is located at the first end portion,
wherein the second surface is located at the second end portion,
wherein a length between the first plate member and the first surface is smaller than a length between the first plate member and the second surface.

14. The tank according to claim 13,
wherein the length between the first plate member and the first surface is 10% to 30% of a length between the first surface and the second surface.

15. The tank according to any one of claim 1 to claim 14, further comprising:
a second plate member configured to partition the internal space, which is partitioned by the first plate member, into a plurality of regions arranged in the first direction,
wherein the second plate member
is disposed closer to the outlet than the first plate member, and
has a plurality of holes extending through the second plate member in the first direction.

16. The tank according to claim 15,
wherein the first plate member and the second plate member are arranged close to each other in the first direction,
wherein the first plate member has first openings of the holes through which the electrolyte is introduced,
wherein the second plate member has second openings of the holes through which the electrolyte is discharged, and
wherein the first openings and the second openings are arranged in such a manner as to be displaced from each other when viewed from the first direction.

17. The tank according to any one of claim 1 to claim 15,
wherein the first plate member has
first openings of the holes provided in a first surface of the first plate member,
second openings of the holes provided in a second surface of the first plate member, and
a communication portion configured to connect the first openings and the second openings to each other, and
wherein the first openings and the second openings are arranged close to each other in the first direction and arranged in such a manner as to be displaced from each other when viewed from the first direction.

18. A tank structure comprising:
the tank according to any one of claims 1 to 17;
a first pipe connected to the inlet;
a second pipe connected to the outlet; and
a pump provided at the second pipe.

19. A redox flow battery system comprising:
the tank structure according to claim 18.
